# EUROPÄISCHE PATENTSCHRIFT

(11) **EP 4 415 999 B1**
(45) Veröffentlichungstag und Bekanntmachung des Hinweises auf die Patenterteilung: **27.08.2025**
(21) Anmeldenummer: 22769949.3
(22) Anmeldetag: 30.08.2022
(51) Int. Cl.: B60K 11/04, B60K 11/02, B60K 1/00

(54) **KÜHLERANORDNUNG MIT WENIGSTENS ZWEI WÄRMEÜBERTRAGERN MIT UNTERSCHIEDLICHER GRUNDFLÄCHE, UND KRAFTFAHRZEUG MIT KÜHLERANORDNUNG**
RADIATOR ARRANGEMENT WITH AT LEAST TWO HEAT EXCHANGERS WITH DIFFERENT SURFACE AREAS, AND MOTOR VEHICLE WITH RADIATOR ARRANGEMENT
AGENCEMENT DE RADIATEURS AVEC AU MOINS DEUX ÉCHANGEURS DE CHALEUR AVEC DES SURFACES DE BASE DIFFÉRENTES, ET VÉHICULE AUTOMOBILE AVEC AGENCEMENT DE RADIATEURS

(30) Priorität: 15.10.2021 DE 102021126835
(43) Veröffentlichungstag der Anmeldung: 21.08.2024
(73) Patentinhaber: Audi AG, 85057 Ingolstadt (DE)
(72) Erfinder: REBINGER, Christian, 80807 München (DE); SCHROEDER, Dirk, 85077 Manching (DE)
(86) Internationale Anmeldenummer: PCT/EP2022/073991
(87) Internationale Veröffentlichungsnummer: WO 2023/061653

(56) Entgegenhaltungen:
- CN-A- 110 014 820
- US-A- 5 046 554
- US-B1- 6 182 744

## Beschreibung

Die Erfindung betrifft eine Kühleranordnung gemäß dem Oberbegriff von Anspruch 1, insbesondere ein Kühlerpaket, für ein verbrennungsmotorisch oder zumindest teilweise elektrisch angetriebenes Kraftfahrzeug, mit einem ersten Wärmeübertrager, der mit einem Kühlmittelkreislauf des Kraftfahrzeugs verbindbar oder verbunden ist; einem zweiten Wärmeübertrager, der mit einem Kältemittelkreislauf des Kraftfahrzeugs verbindbar oder verbunden ist; wobei, bezogen auf eine Hauptrichtung eines Luftstroms durch die Kühleranordnung, der erste Wärmeübertrager vor dem zweiten Wärmeübertrager angeordnet ist, und wobei eine mit dem Luftstrom beaufschlagte erste Grundfläche des ersten Wärmeübertragers kleiner ist als eine mit dem Luftstrom beaufschlagte zweite Grundfläche des zweiten Wärmeübertragers.

Eine solche Kühleranordnung ist beispielsweise aus der CN 110 014 820 A bekannt. In Bezug auf weitere bekannte Kühleranordnungen bzw. Kühlerpakete wird beispielsweise auf die US 6 182 744 B1 hingewiesen, aus der eine Kühleranordnung mit einem zusätzlichen Wärmeübertrager bekannt ist, wobei der Wärmeübertrager und ein Gaskühler bzw. Kondensator im Wesentlichen die gleiche Fläche aufweisen. Die DE 199 28 193 A1 zeigt die serielle Anordnung von einem Kühlmittelkühler und einem Ladeluftkühler. Aus der DE 10 2007 022 859 A1 ist die serielle Anordnung von zwei Heizungswärmeübertragern mit im Wesentlichen gleicher Fläche bekannt.

Bei Kühleranordnungen für vebrennungsmotorisch oder zumindest teilweise elektrisch angetriebene Kraftfahrzeuge ist es besonders wünschenswert, dass elektrische Energie möglichst effektiv genutzt werden kann, beispielsweise durch einen optimierten Betrieb von einer Kälteanlage bzw. von Kühlmittelkreisläufen. Bei bisherigen Kühleranordnungen hat sich gezeigt, dass aufgrund der Durchströmung des ersten Wärmeübertragers mit Kühlmittel der Luftstrom erwärmt wird und dann erwärmt auf den zweiten Wärmeübertrager trifft. Wenn dies bei im Wesentlichen gleich großen, d.h. mit im Wesentlichen gleicher Grundfläche ausgebildeten, Wärmeübertragern geschieht, kann das im zweiten Wärmeübertrager zirkulierende Kältemittel nicht optimal abgekühlt werden, insbesondere wird das Auskühlpotential des Kältemittels nicht voll ausgeschöpft. Ferner ist es unter Umständen auch möglich, dass der Luftstrom das Kältemittel zumindest bereichsweise erwärmt. Hinsichtlich Effizienz und Leistung einer Kälteanlage kann es dadurch bedingt zu Einbußen kommen.

Die der Erfindung zu Grunde liegende Aufgabe wird darin gesehen, eine Kühleranordnung anzugeben, bei der die obigen Nachteile vermieden oder zumindest reduziert werden können.

Diese Aufgabe wird gelöst durch eine Kühleranordnung mit den Merkmalen des Patentanspruchs 1 und durch ein Kraftfahrzeug mit einer solchen Kühleranordnung. Vorteilhafte Ausgestaltungen mit zweckmäßigen Weiterbildungen sind in den abhängigen Patentansprüchen angegeben.

Vorgeschlagen wird also eine Kühleranordnung, insbesondere ein Kühlerpaket, für ein verbrennungsmotorisch oder zumindest teilweise elektrisch angetriebenes Kraftfahrzeug, mit
einem ersten Wärmeübertrager, der mit einem Kühlmittelkreislauf des Kraftfahrzeugs verbindbar oder verbunden ist, und mit einem zweiten Wärmeübertrager, der mit einem Kältemittelkreislauf des Kraftfahrzeugs verbindbar oder verbunden ist, wobei, bezogen auf eine Hauptrichtung eines Luftstroms durch die Kühleranordnung, der erste Wärmeübertrager vor dem zweiten Wärmeübertrager angeordnet ist, und wobei eine mit dem Luftstrom beaufschlagte erste Grundfläche des ersten Wärmeübertragers kleiner ist als eine mit dem Luftstrom beaufschlagte zweite Grundfläche des zweiten Wärmeübertragers. Dabei ist vorgesehen, dass die erste Grundfläche so dimensioniert ist, dass sie die zweite Grundfläche nur in einem bezogen auf den Kältemittelfluss im zweiten Wärmeübertrager eingangsseitigen Bereich überlappt.

Hierdurch kann sichergestellt werden, dass ein durch den ersten Wärmeübertrager erwärmter Luftstrom nur an Stellen bzw. Bereichen des zweiten Wärmeübertragers auftritt, der so warm bzw. heiß ist, dass ein Wärmeübergang auf bereits erwärmte Luft möglich ist. Somit können die Effizienz des Auskühlens des Kältemittels im zweiten Wärmeübertrager sowie die Leistungsfähigkeit des Kältemittelkreislaufs gesteigert werden, was zu einem optimierten Betrieb des Kältemittelkreislaufs bzw. des mit dem zweiten Wärmeübertrager verbundenen Gesamtsystems führt. Mit anderen Worten weist die Kühleranordnung eine zueinander wärmeoptimierte Positionierung der beiden Wärmeübertrager auf.

Bei der Kühleranordnung kann die Hauptströmungsrichtung von Kühlmittel im ersten Wärmeübertrager im Wesentlichen parallel oder orthogonal zur Hauptströmungsrichtung von Kältemittel im zweiten Wärmeübertrager sein.

Bei der Kühleranordnung kann die erste Grundfläche bis etwa 80% der zweiten Grundfläche betragen, insbesondere etwa 10% bis 60%. Hierdurch wird sichergestellt, dass nur ein kleinerer Teil der zweiten Grundfläche von der ersten Grundfläche abdeckt ist, so dass auch auf mindestens 20% der zweiten Grundfläche der Luftstrom ohne vorherige Passage durch den ersten Wärmeübertrager auftrifft. Insbesondere soll durch die Anordnung bzw. Grundflächenrelation der Wärmeübertrager zueinander vermieden werden, dass ein Abschnitt oder Bereich der Grundfläche des zweiten Wärmeübertragers mit dem ersten Wärmeübertrager großflächig abgedeckt ist, wenn sich in dem betreffenden Abschnitt bzw. Bereich das Kältemittel in der Nähe der Austrittsabschnitte der mindestens ersten Flut oder im Bereich der Strömungsrichtungsveränderung befindet. Ein erfindungsgemäßen Verhältnis von erster Grundfläche zu zweiter Grundfläche liegt bei etwa 20% bis 50%.

Bei der Kühleranordnung ist der zweite Wärmeübertrager dazu eingerichtet, den eingangsseitigen Kältemittelfluss auf eine thermisch wirksame Strömungsbreite innerhalb des zweiten Wärmeübertragers zu verteilen, wobei die erste Grundfläche eine Breite aufweist, die im Wesentlichen der Strömungsbreite im zweiten Wärmeübertrager entspricht. Mit anderen Worten orientiert sich die konstruktive Ausführung des ersten Wärmeübertragers an der Fluidströmungsführung im zweiten, luftseitig nachgeschalteten Wärmeübertrager. Hierdurch wird im Übrigen auch sichergestellt, dass der erste Wärmeübertrager (leidglich) den wärmsten Bereich des zweiten Wärmeübertragers abdeckt.

Bei der Kühleranordnung kann der erste Wärmeübertrager dazu eingerichtet sein, dass Kühlmittel unidirektional oder bidirektional mit Umlenkung hindurchgeleitet wird. Mit anderen Worten kann der erste Wärmeübertrager einflutig (I-Flow) oder zweiflutig (U-Flow) ausgeführt sein.

Bei der Kühleranordnung weist der zweite Wärmeübertrager wenigstens einen oberen Wärmeübertragerbereich und wenigstens einen unteren Wärmeübertragerbereich auf, wobei die zweite Grundfläche den oberen Wärmeübertragerbereich und den unteren Wärmeübertragerbereich umfasst.

Dabei kann der untere Wärmeübertragerbereich als Unterkühlstrecke ausgebildet sein.

Die erste Grundfläche überlappt dabei nur einen Bereich des oberen Wärmeübertragerbereichs. Mit anderen Worten ist der erste Wärmeübertrager außerhalb der Unterkühlstrecke des zweiten Wärmeübertragers angeordnet und deckt nur einen Teil des ersten Wärmeübertragerbereichs ab.

Zusätzlich kann bei der Kühleranordnung die Hauptströmungsrichtung von Kühlmittel im ersten Wärmeübertrager im Wesentlichen parallel oder orthogonal zur Hauptströmungsrichtung von Kältemittel im oberen Wärmeübertragerbereich des zweiten Wärmeübertragers sein. Somit ist es unbeachtlich, in welche Richtung das Kältemittel im zweiten Wärmeübertragerbereich, insbesondere in der Unterkühlungsstrecke, strömt, weil dieser Bereich nicht von einem Luftstrom beaufschlagt wird, der vom ersten Wärmeübertrager erwärmt worden ist.

Bei der Kühleranordnung kann der erste Wärmeübertrager ein Niedertemperaturkühler sein. Insbesondere kann es sich dabei um einen sogenannten Tief-Niedertemperaturkühler handeln.

Bei der Kühleranordnung kann der zweite Wärmeübertrager ein Kondensator oder Gaskühler sein.

Auch wenn oben eine Struktur bzw. Konfiguration einer Kühleranordnung mit einem ersten und einem zweiten Wärmeübertrager vorgeschlagen wird, ist darauf hinzuweisen, dass die Konfiguration auch mehrere erste und/oder mehrere zweite Wärmeübertrager aufweisen kann. Ferner ist es auch denkbar, dass eine Konfiguration bzw. Struktur drei hintereinander angeordnete Wärmeübertrager aufweist.

Ein Kraftfahrzeug mit verbrennungsmotorischem oder zumindest teilweise elektrischem Antrieb mit wenigstens einem Kühlmittelkreislauf zur Kühlung von wenigstens einer elektrischen Komponente, insbesondere Hochvoltbatterie oder/und Elektromotor, und mit wenigstens einem Kältemittelkreislauf zur Klimatisierung eines Fahrzeuginnenraums kann eine oben beschriebene Kühleranordnung aufweisen, wobei der ersten Wärmeübertrager mit dem Kühlmittelkreislauf verbunden ist und der zweite Wärmeübertrager mit dem Kältemittelkreislauf verbunden ist.

Es wird darauf hingewiesen, dass die Funktionalität des ersten Wärmeübertragers auch für eine (Servo-) Ölkühlfunktlion, Ladeluft- oder Zusatzwasserkühlung genutzt bzw. übertragen werden kann. Der Anwendungsbereich ist daher nicht zwingend auf die Kühlung von elektrischen Komponenten beschränkt zu verstehen.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte und schematische Perspektivdarstellung eines Beispiels einer Kühleranordnung;
- Fig. 2: eine vereinfachte und schematische Perspektivdarstellung eines weiteren Beispiels einer Kühleranordnung;
- Fig. 3: eine vereinfachte und schematische Perspektivdarstellung eines weiteren Beispiels einer Kühleranordnung;
- Fig. 4: eine vereinfachte und schematische Perspektivdarstellung eines weiteren Beispiels einer Kühleranordnung;
- Fig. 5: eine vereinfachte und schematische Darstellung von überlappenden Grundflächen von Wärmeübertragern der Kühleranordnungen der Fig. 1 bis 4;
- Fig. 6: eine vereinfachte und schematische Darstellung eines Kraftfahrzeugs mit einer Kühleranordnung.

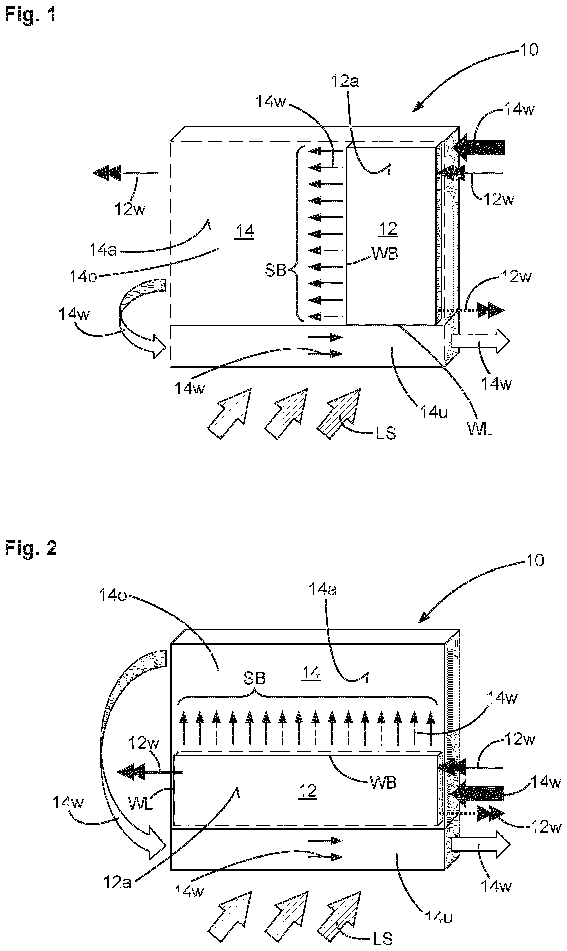

In Fig. 1 ist in einer vereinfachten und schematischen Perspektivdarstellung eine Kühleranordnung 10 dargestellt, die als Kühlerpaket bezeichnet werden kann. Die Kühleranordnung umfasst einen ersten Wärmeübertrager 12 und einen zweiten Wärmeübertrager 14. Bezogen auf eine Hauptrichtung (schraffierte Konturpfeile) eines Luftstroms LS durch die Kühleranordnung 10 ist der erste Wärmeübertrager 12 vor dem zweiten Wärmeübertrager 14 angeordnet ist. Mit anderen Worten sind der erste Wärmeübertrager 12 und der zweite Wärmeübertrager 14 seriell bzw. in Reihe angeordnet bezogen auf den sie durchströmenden Luftstrom LS.

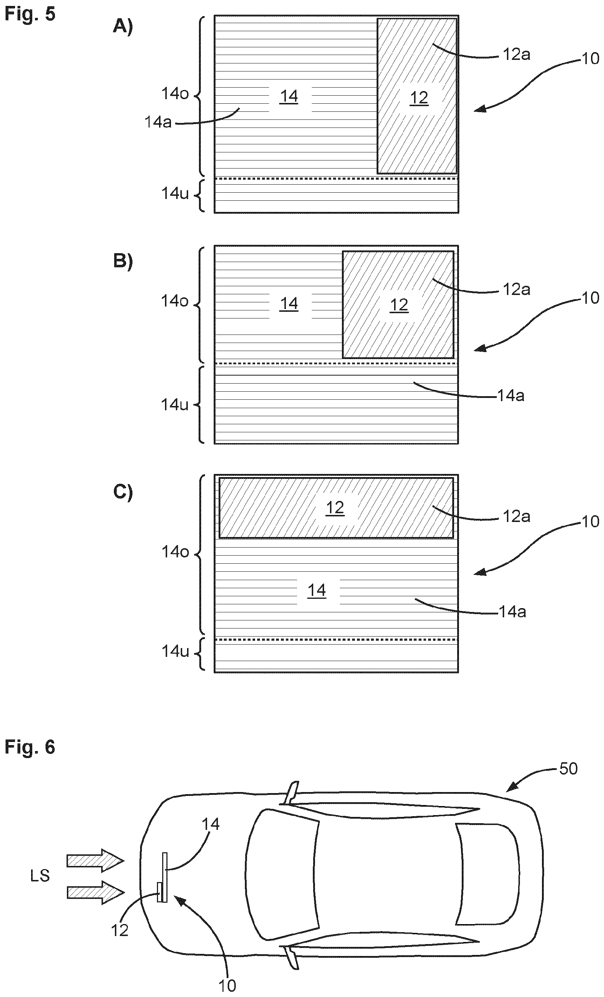

Der erste Wärmeübertrager 12 weist eine mit dem Luftstrom LS beaufschlagte erste Grundfläche 12a auf, die kleiner ist als eine mit dem Luftstrom LS beaufschlagte zweite Grundfläche 14a des zweiten Wärmeübertragers 14. Für das Beispiel der Kühleranordnung 10 der Fig. 1 wird ergänzend auch auf die Darstellung der Fig. 5A hingewiesen, aus der die erste Grundfläche 12a (schräg schraffiert) und die zweite Grundfläche 14a (horizontal schraffiert) ebenfalls ersichtlich sind. Die Grundfläche 12a, 14a kann auch als Wirkfläche bezeichnet werden.

Ein Fluidstrom eines Wärmeübertragerfluids durch den ersten Wärmeübertrager 12 ist durch die schwarzen Doppelpfeile 12w angedeutet. Dabei kann das Wärmeübertragerfluid den ersten Wärmeübertrager 12 bezogen auf die Grund- bzw. Wirkfläche 12a nur einmal durchströmen, was durch die beiden Doppelpfeile 12w mit durchgezogenen Linien illustriert ist. Dies kann auch als I-Flow bzw. I-Fluss bezeichnet werden. Alternativ kann das Wärmeübertragerfluid den ersten Wärmeübertrager 12 bezogen auf die Grundfläche 12a zweimal durchströmen, was durch den rechten Doppelpfeil 12w (durchgezogene Linie) und den Doppelpfeil 12w mit gestrichelter Linie illustriert ist. Dies kann auch als U-Flow bzw. U-Fluss bezeichnet werden.

Ein Fluidstrom eines Wärmeübertragerfluids durch den zweiten Wärmeübertrager 14 ist durch schwarze einfache Pfeile 14w sowie die beiden Konturpfeile 14w mit weißer (teilweise grauer) Füllung illustriert.

Bei der Kühleranordnung 10 ist die erste Grundfläche 12a des ersten Wärmeübertragers 12 so dimensioniert ist, dass sie die zweite Grundfläche 14a des zweiten Wärmeübertragers 14 nur in einem bezogen auf den Fluss von Wärmeübertragerfluid (Pfeile 14w) im zweiten Wärmeübertrager 14 eingangsseitigen Bereich überlappt.

Die Dimensionierung der ersten Grundfläche 12a ist dabei abhängig von der erforderlichen, umzusetzenden Leistung des ersten Wärmeübertragers 12. Mit hoher Leistungsanforderung ist diese entsprechend ausgeprägter bzw. größer zu konstruieren als bei niedrigen Leistungsanforderungen.

Entsprechen fällt der vom ersten Wärmeübertrager 12 beim zweiten Wärmeübertrager 14 überlappte Wirkbereich größer bzw. keiner aus. Mit anderen Worten: von einem thermisch hoch belasteten Abschnitt auf der Kältemitteleintrittsseite des zweiten Wärmeübertragers 14 erstreckt sich die Wirkfläche 12a des ersten Wärmeübertragers 12 immer weiter in die Wirkfläche 14 des zweiten Wärmeübertragers hinein. Die Anteile der Überlappung nehmen mit Zunahme der Leistungsanforderungen des ersten Wärmeübertragers 12 zu.

Der erste Wärmeübertrager 12 kann insbesondere mit einem Kühlmittelkreislauf eines Kraftfahrzeugs verbunden sein. Der zweite Wärmeübertrager 14 kann insbesondere mit einem Kältemittelkreislauf des Kraftfahrzeugs verbunden sein. Das Wärmeübertragerfluid im ersten Wärmeübertrager 12 kann beispielsweise ein Kühlmittel, wie etwa Wasser oder eine Wasser-Glykol-Gemisch oder dergleichen sein. Das Wärmeübertragerfluid im zweiten Wärmeübertrager 14 kann beispielsweise ein Kältemittel sein, wie etwa R1234yf oder R744.

Im Beispiel der Fig. 1 ist die Hauptströmungsrichtung 12w von Kühlmittel im ersten Wärmeübertrager 12 im Wesentlichen parallel zur Hauptströmungsrichtung 14w von Kältemittel im zweiten Wärmeübertrager 14.

Bei der Kühleranordnung 10 ist der zweite Wärmeübertrager 14 dazu eingerichtet, den eingangsseitigen Kältemittelfluss 14w auf eine thermisch wirksame Strömungsbreite SB innerhalb des zweiten Wärmeübertragers 14 zu verteilen. Die erste Grundfläche 12a des ersten Wärmeübertragers 12 weist eine Breite WB auf, die im Wesentlichen bzw. idealerweise der Strömungsbreite SB im zweiten Wärmeübertrager 14 entspricht.

Eine Wirklänge WL des ersten Wärmeübertragers 12 ist dabei abhängig von der seinerseits zu erfüllenden bzw. abzubildenden maximalen Leistung.

Aus der Fig. 1 ist weiter ersichtlich, dass der zweite Wärmeübertrager 14 einen oberen Wärmeübertragerbereich 14o und einen unteren Wärmeübertragerbereich 14u aufweist, wobei die zweite Grundfläche 14a den oberen Wärmeübertragerbereich 14o und den unteren Wärmeübertragerbereich 14u umfasst bzw. einschließt, was auch aus der Fig. 5A ersichtlich ist. Dabei kann der obere Wärmeübertragerbereich 14o als Kondensationsstrecke und der untere Wärmeübertragerbereich 14u als Unterkühlstrecke ausgebildet sein. Die erste Grundfläche 12a des ersten Wärmeübertragers 12 überlappt dabei nur einen (Teil-)Bereich des oberen Wärmeübertragerbereichs 14o.

Fig. 2 zeigt ein weiteres Beispiel einer Kühleranordnung 10 mit einem ersten Wärmeübertrager 12 und einem zweiten Wärmeübertrager 14. Der erste Wärmeübertrager 12 weist in diesem Beispiel aufgrund der anderen strömungstechnischen Ausgestaltung (siehe Pfeile 14w) des zweiten Wärmeübertragers 14, eine verglichen mit der Fig. 1 andere Positionierung und Dimensionierung auf. Kältemittelflussrichtung und Kühlmittelflussrichtung sind in diesem Anwendungsbeispiel vertikal bzw. über Kreuz ausgerichtet. Im Übrigen ist aber die obige Beschreibung zur Fig. 1 auch für das Beispiel der Fig. 2 anwendbar und übertragbar. Lediglich gibt es für das Beispiel der Fig. 2 keine weitere Darstellung in der Fig. 5.

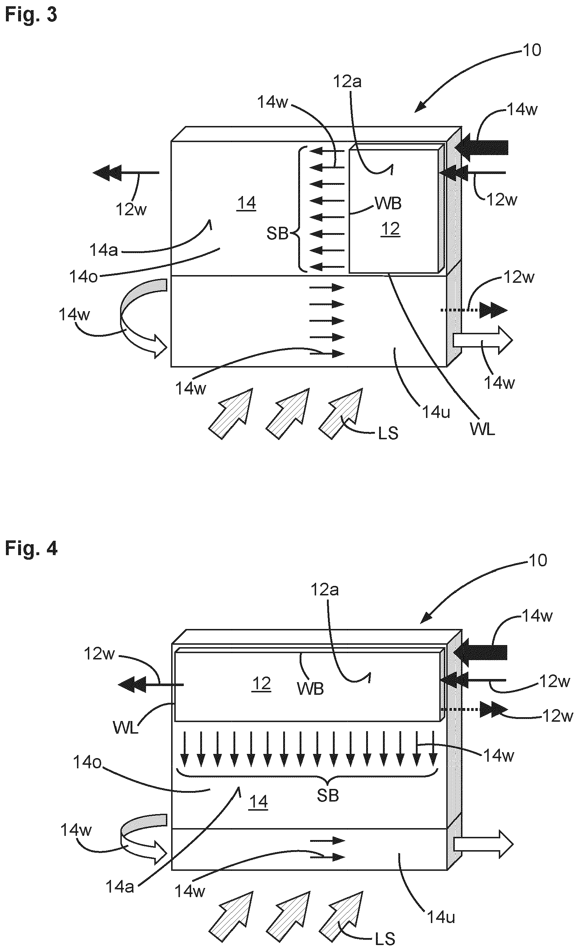

Fig. 3 zeigt ein weiteres Beispiel einer Kühleranordnung 10 mit einem ersten Wärmeübertrager 12 und einem zweiten Wärmeübertrager 14. Der erste Wärmeübertrager 12 weist in diesem Beispiel aufgrund der anderen strömungstechnischen Ausgestaltung (siehe Pfeile 14w) des zweiten Wärmeübertragers 14, eine verglichen mit den Fig. 1 und 2 andere Positionierung und Dimensionierung auf. Im Übrigen ist aber die obige Beschreibung zur Fig. 1 auch für das Beispiel der Fig. 3 anwendbar und übertragbar. Bezüglich der Anordnung und Ausgestaltung der ersten Grundfläche 12a und der zweiten Grundfläche 14a wird auch auf die Fig. 5B hingewiesen.

Fig. 4 zeigt ein weiteres Beispiel einer Kühleranordnung 10 mit einem ersten Wärmeübertrager 12 und einem zweiten Wärmeübertrager 14. Der erste Wärmeübertrager 12 weist in diesem Beispiel aufgrund der anderen strömungstechnischen Ausgestaltung (siehe Pfeile 14w) des zweiten Wärmeübertragers 14, eine verglichen mit den Fig. 1 bis 3 andere Positionierung und Dimensionierung auf. Ferner ist in der Fig. 4 ein Beispiel gezeigt, bei dem der zweite Wärmeübertrager einen größeren unteren Wärmeübertragerbereich 14u aufweist, der insbesondere für den Fall des Gebrauchs bzw. Einsatzes von überkritisch arbeitenden Kältemittel nicht als Unterkühlstrecke im eigentlichen Sinn ausgebildet ist. Im Übrigen ist aber die obige Beschreibung zur Fig. 1 auch für das Beispiel der Fig. 4 anwendbar und übertragbar. Bezüglich der Anordnung und Ausgestaltung der ersten Grundfläche 12a und der zweiten Grundfläche 14a wird auch auf die Fig. 5C hingewiesen.

Mittels allen Beispiele von Kühlerpaketen 10 der Fig. 1 bis 4 kann sichergestellt werden, dass ein durch den ersten Wärmeübertrager 12 erwärmter Luftstrom nur an Stellen bzw. Bereichen des zweiten Wärmeübertragers 14 auftritt, der so warm bzw. heiß ist, dass ein Wärmeübergang auf bereits erwärmte Luft möglich ist. Somit kann die Effizienz des Auskühlens des Kältemittels im zweiten Wärmeübertrager 14 gesteigert werden, was zu einem optimierten Betrieb des Kältemittelkreislaufs bzw. des mit dem zweiten Wärmeübertrager 14 verbundenen Gesamtsystems führt.

Unter Bezugnahme auf die Fig. 1 bis 5 wird auch darauf hingewiesen, dass der erste Wärmeübertrager 12 (deutlich) kleiner ausgeführt ist als der zweite Wärmeübertrager 14. Insbesondere ist aus allen Beispielen der Fig. 1 bis 5 ersichtlich, dass die erste Grundfläche 12a bis etwa 80% der zweiten Grundfläche 14a beträgt, insbesondere etwa 10% bis 60%. Beispielsweise ist in Fig. 5A die erste Grundfläche 12a etwa 25% der zweiten Grundfläche 14a. In Fig. 5B beträgt die erste Grundfläche 12a etwa 25% der zweiten Grundfläche 14. Aus der Fig. 5C ist ersichtlich, dass die erste Grundfläche 12 etwa 29% der zweiten Grundfläche 14 beträgt.

Fig. 6 zeigt in einer vereinfachten und schematischen Draufsicht ein zumindest teilweise elektrisch angetriebenes Kraftfahrzeug 50 mit einer oben beschriebenen Kühleranordnung 10 mit einem ersten Wärmeübertrager 12 und einem zweiten Wärmeübertrager 14.

Zusammenfassend wird noch darauf hingewiesen, dass bei einer Kühleranordnung 10 die Durchströmung oder/und Anordnung der beiden Wärmeübertrager 12, 14 so angepasst ist, dass ein erwärmter Luftstrom des ersten Wärmeübertragers 14 an Stellen bzw. Bereichen des zweiten Wärmeübertragers 14 auftritt, die trotz eines erhöhten Lufttemperaturniveaus einen Wärmeübergang vom zweiten Wärmeübertrager 14 auf den Luftstrom ermöglichen. Die Anordnung der beiden Wärmeübertrager 12, 14 erfolgt insbesondere so, dass der Austrittsluftstrom des ersten Wärmeübertragers 12 auf die wärmstens fluidführenden Segmente des nachgeschalteten zweiten Wärmeübertragers 14 trifft. Dies wird insbesondere durch die teilflächig überlappende Ausgestaltung des ersten Wärmeübertragers 12 erreicht sowie unter der Berücksichtigung der jeweiligen Strömungsrichtungen von Wärmetauscherfluid (Kühlmittel bzw. Kältemittel) in den beiden Wärmeübertragern 12, 14.

## Patentansprüche

1. Kühleranordnung (10), insbesondere Kühlerpaket, für ein verbrennungsmotorisch oder zumindest teilweise elektrisch angetriebenes Kraftfahrzeug (50), mit
einem ersten Wärmeübertrager (12), der mit einem Kühlmittelkreislauf des Kraftfahrzeugs verbindbar oder verbunden ist;
einem zweiten Wärmeübertrager (14), der mit einem Kältemittelkreislauf des Kraftfahrzeugs verbindbar oder verbunden ist;
wobei, bezogen auf eine Hauptrichtung eines Luftstroms (LS) durch die Kühleranordnung (10), der erste Wärmeübertrager (12) vor dem zweiten Wärmeübertrager (14) angeordnet ist,
wobei eine mit dem Luftstrom (LS) beaufschlagte erste Grundfläche (12a) des ersten Wärmeübertragers (12) kleiner ist als eine mit dem Luftstrom (LS) beaufschlagte zweite Grundfläche (14a) des zweiten Wärmeübertragers (14),
wobei die erste Grundfläche (12a) so dimensioniert ist, dass sie die zweite Grundfläche (14a) nur in einem bezogen auf den Kältemittelfluss (14w) im zweiten Wärmeübertrager (14) eingangsseitigen Bereich überlappt,
**dadurch gekennzeichnet, dass** der zweite Wärmeübertrager (14) dazu eingerichtet ist, den eingangsseitigen Kältemittelfluss (14w) auf eine thermisch wirksame Strömungsbreite (SB) innerhalb des zweiten Wärmeübertragers (14) zu verteilen, wobei die erste Grundfläche (12a) eine Breite (WB) aufweist, die im Wesentlichen der Strömungsbreite (SB) im zweiten Wärmeübertrager (14) entspricht, und wobei die erste Grundfläche (12a) 20% bis 50% der zweiten Grundfläche (14a) beträgt,
dass der zweite Wärmeübertrager (14) wenigstens einen oberen Wärmeübertragerbereich (14o) und wenigstens einen unteren Wärmeübertragerbereich (14u) aufweist, wobei die zweite Grundfläche (14a) den oberen Wärmeübertragerbereich (14o) und den unteren Wärmeübertragerbereich (14u) umfasst, und
dass die erste Grundfläche (12a) nur einen Bereich des oberen Wärmeübertragerbereichs (14o) überlappt.

2. Kühleranordnung (10) nach Anspruch 1, **dadurch gekennzeichnet, dass** die Hauptströmungsrichtung (12w) von Kühlmittel im ersten Wärmeübertrager (12) im Wesentlichen parallel oder orthogonal zur Hauptströmungsrichtung (14w) von Kältemittel im zweiten Wärmeübertrager (14) ist.

3. Kühleranordnung (10) nach Anspruch 1 oder 2, **dadurch gekennzeichnet, dass** der erste Wärmeübertrager (12) dazu eingerichtet ist, dass Kühlmittel unidirektional oder bidirektional mit Umlenkung hindurchgeleitet wird.

4. Kühleranordnung (10) nach einem der vorhergehenden Ansprüche, **dadurch gekennzeichnet, dass** der untere Wärmeübertragerbereich (14u) als Unterkühlstrecke ausgebildet ist.

5. Kühleranordnung (10) nach Anspruch 2, **dadurch gekennzeichnet, dass** die Hauptströmungsrichtung (12w) von Kühlmittel im ersten Wärmeübertrager (12) im Wesentlichen parallel oder orthogonal zur Hauptströmungsrichtung (14w) von Kältemittel im oberen Wärmeübertragerbereich (14o) des zweiten Wärmeübertragers (14) ist.

6. Kühleranordnung (10) nach einem der vorhergehenden Ansprüche, **dadurch gekennzeichnet, dass** der erste Wärmeübertrager (12) ein Niedertemperaturkühler ist.

7. Kühleranordnung (10) nach einem der vorhergehenden Ansprüche, **dadurch gekennzeichnet, dass** der zweite Wärmeübertrager (14) ein Kondensator oder Gaskühler ist.

8. Kraftfahrzeug (50) mit verbrennungsmotorischem oder zumindest teilweise elektrischem Antrieb mit
wenigstens einem Kühlmittelkreislauf zur Kühlung von wenigstens einer elektrischen Komponente, insbesondere Hochvoltbatterie oder/und Elektromotor;
wenigstens einem Kältemittelkreislauf zur Klimatisierung eines Fahrzeuginnenraums; und
einer Kühleranordnung (10) gemäß einem der vorhergehenden Ansprüche, wobei der ersten Wärmeübertrager (12) mit dem Kühlmittelkreislauf verbunden ist und der zweite Wärmeübertrager (14) mit dem Kältemittelkreislauf verbunden ist.

## Claims

1. A radiator arrangement (10), in particular a radiator package, for a motor vehicle (50) driven by an internal combustion engine or at least partially electrically, comprising:
a first heat exchanger (12) which can be or is connected to a coolant circuit of the motor vehicle;
a second heat exchanger (14) which can be or is connected to a refrigerant circuit of the motor vehicle;
wherein, relative to a main direction of an air flow (LS) through the radiator arrangement (10), the first heat exchanger (12) is arranged in front of the second heat exchanger (14),
wherein a first base area (12a) of the first heat exchanger (12) exposed to the air flow (LS) is smaller than a second base area (14a) of the second heat exchanger (14) exposed to the air flow (LS),
wherein the first base area (12a) is dimensioned such that it overlaps the second base area (14a) only in an inlet-side region with respect to the refrigerant flow (14w) in the second heat exchanger (14),
**characterized in that** the second heat exchanger (14) is designed to distribute the inlet-side refrigerant flow (14w) over a thermally effective flow width (SB) within the second heat exchanger (14), wherein the first base area (12a) has a width (WB) which substantially corresponds to the flow width (SB) in the second heat exchanger (14), and wherein the first base area (12a) amounts to 20% to 50% of the second base area (14a), **in that** the second heat exchanger (14) has at least one upper heat exchanger region (14o) and at least one lower heat exchanger region (14u), wherein the second base area (14a) comprises the upper heat exchanger region (14o) and the lower heat exchanger region (14u), and
**in that** the first base area (12a) overlaps only a region of the upper heat exchanger region (14o).

2. The radiator arrangement (10) according to claim 1, **characterized in that** the main flow direction (12w) of coolant in the first heat exchanger (12) is substantially parallel or orthogonal to the main flow direction (14w) of refrigerant in the second heat exchanger (14).

3. The radiator arrangement (10) according to claim 1 or 2, **characterized in that** the first heat exchanger (12) is designed so that coolant is passed through unidirectionally or bidirectionally with deflection.

4. The radiator arrangement (10) according to any one of the preceding claims, **characterized in that** the lower heat exchanger region (14u) is designed as a subcooling path.

5. The radiator arrangement (10) according to claim 2, **characterized in that** the main flow direction (12w) of coolant in the first heat exchanger (12) is substantially parallel or orthogonal to the main flow direction (14w) of refrigerant in the upper heat exchanger region (14o) of the second heat exchanger (14).

6. The radiator arrangement (10) according to any one of the preceding claims, **characterized in that** the first heat exchanger (12) is a low-temperature radiator.

7. The radiator arrangement (10) according to any one of the preceding claims, **characterized in that** the second heat exchanger (14) is a condenser or gas radiator.

8. A motor vehicle (50) with internal combustion engine drive or with at least partially electric drive, comprising:
at least one coolant circuit for cooling at least one electrical component, in particular a high-voltage battery and/or electric motor;
at least one refrigerant circuit for air conditioning a vehicle interior; and
a radiator arrangement (10) according to any one of the preceding claims, wherein the first heat exchanger (12) is connected to the coolant circuit and the second heat exchanger (14) is connected to the refrigerant circuit.

## Revendications

1. Agencement de radiateur (10), en particulier ensemble de radiateur, pour un véhicule automobile (50) entraîné par un moteur à combustion ou au moins partiellement électrique, avec
un premier échangeur de chaleur (12) qui peut être ou est connecté à un circuit de liquide de refroidissement du véhicule automobile ;
un second échangeur de chaleur (14) qui peut être ou est connecté à un circuit de réfrigérant du véhicule automobile ;
dans lequel, par rapport à une direction principale d'un flux d'air (LS) à travers l'agencement de radiateur (10), le premier échangeur de chaleur (12) est disposé devant le second échangeur de chaleur (14),
dans lequel une première surface de base (12a) du premier échangeur de chaleur (12) exposée au flux d'air (LS) est plus petite qu'une seconde surface de base (14a) du second échangeur de chaleur (14) exposée au flux d'air (LS),
dans lequel la première surface de base (12a) est dimensionnée de sorte qu'elle chevauche la seconde surface de base (14a) uniquement dans une zone côté entrée par rapport au flux de réfrigérant (14w) dans le second échangeur de chaleur (14),
**caractérisé en ce que** le second échangeur de chaleur (14) est configuré pour répartir le flux de réfrigérant (14w) côté entrée sur une largeur d'écoulement (SB) thermiquement efficace à l'intérieur du second échangeur de chaleur (14), dans lequel la première surface de base (12a) présente une largeur (WB) qui correspond sensiblement à la largeur d'écoulement (SB) dans le second échangeur de chaleur (14) et dans lequel la première surface de base (12a) représente 20 % à 50 % de la seconde surface de base (14a), **en ce que** le second échangeur de chaleur (14) présente au moins une zone d'échangeur de chaleur supérieure (14o) et au moins une zone d'échangeur de chaleur inférieure (14u), dans lequel la seconde surface de base (14a) comprend la zone d'échangeur de chaleur supérieure (14o) et la zone d'échangeur de chaleur inférieure (14u), et
**en ce que** la première surface de base (12a) chevauche uniquement une zone de la zone d'échangeur de chaleur supérieure (14o).

2. Agencement de radiateur (10) selon la revendication 1, **caractérisé en ce que** la direction d'écoulement principale (12w) du liquide de refroidissement dans le premier échangeur de chaleur (12) est sensiblement parallèle ou orthogonale à la direction d'écoulement principale (14w) de réfrigérant dans le second échangeur de chaleur (14).

3. Agencement de radiateur (10) selon la revendication 1 ou 2, **caractérisé en ce que** le premier échangeur de chaleur (12) est configuré pour que le liquide de refroidissement soit acheminé de manière unidirectionnelle ou bidirectionnelle avec déviation.

4. Agencement de radiateur (10) selon l'une quelconque des revendications précédentes, **caractérisé en ce que** la zone d'échangeur de chaleur inférieure (14u) est conçue en tant que voie de sous-refroidissement.

5. Agencement de radiateur (10) selon la revendication 2, **caractérisé en ce que** la direction d'écoulement principale (12w) du liquide de refroidissement dans le premier échangeur de chaleur (12) est sensiblement parallèle ou orthogonale à la direction d'écoulement principale (14w) de réfrigérant dans la zone d'échangeur de chaleur supérieure (14o) du second échangeur de chaleur (14).

6. Agencement de radiateur (10) selon l'une quelconque des revendications précédentes, **caractérisé en ce que** le premier échangeur de chaleur (12) est un radiateur à basse température.

7. Agencement de radiateur (10) selon l'une quelconque des revendications précédentes, **caractérisé en ce que** le second échangeur de chaleur (14) est un condenseur ou un radiateur à gaz.

8. Véhicule automobile (50) avec entraînement à moteur à combustion ou au moins partiellement électrique avec
au moins un circuit de liquide de refroidissement pour refroidir au moins un composant électrique, en particulier une batterie haute tension et/ou un moteur électrique ;
au moins un circuit de réfrigérant pour climatiser un habitacle de véhicule ; et
un agencement de radiateur (10) selon l'une quelconque des revendications précédentes, dans lequel le premier échangeur de chaleur (12) est connecté au circuit de liquide de refroidissement et le second échangeur de chaleur (14) est connecté au circuit de réfrigérant.
